# EUROPÄISCHE PATENTSCHRIFT

(11) **EP 3 742 327 B1**
(45) Veröffentlichungstag und Bekanntmachung des Hinweises auf die Patenterteilung: **19.07.2023**
(21) Anmeldenummer: 19175734.3
(22) Anmeldetag: 21.05.2019
(51) Int. Cl.: G06K 7/00

(54) **RFID-SYSTEM MIT WENIGSTENS EINER RFID-LESEEINHEIT**
RFID SYSTEM WITH AT LEAST ONE RFID READER UNIT
SYSTÈME RFID DOTÉ D'AU MOINS UNE UNITÉ DE LECTURE RFID

(43) Veröffentlichungstag der Anmeldung: 25.11.2020
(73) Patentinhaber: Feig Electronic GmbH, 35781 Weilburg (DE)
(72) Erfinder: Reichwein, Elmar, 35781 Weilburg-Waldhausen (DE)
(74) Vertreter: Knefel, Cordula

(56) Entgegenhaltungen:
- FINKENZELLER K: "RFID Handbuch, 3 - Grundlegende Funktionsweise", RFID HANDBOOK: GRUNDLAGEN UND PRAKTISCHE ANWENDUNGEN, XX, XX, 26. September 2002 (2002-09-26), Seiten I,29-31,34, XP002337900,

## Beschreibung

Die Erfindung betrifft ein RFID-System mit wenigstens einer RFID-Leseeinheit.

In der Logistik müssen Personen vielfach Labels auf Waren zum Beispiel Paketen, Lagerkästen oder dergleichen scannen, um sie zu identifizieren, und die Waren dann anschließend anfassen und an einer andere Stelle ablegen, zum Beispiel auf einer Palette, in einem Regal oder dergleichen.

Aus der Praxis ist bekannt, für den Scanvorgang Handscanner zu verwenden, die für das Scannen in die Hand genommen werden müssen und nach dem Scannen wieder weggelegt werden müssen.

Neuere Scanner, die aus der Praxis bekannt sind, können schon als "wearables" am Arm oder auch an der Hand getragen werden, um so die Handhabung zu vereinfachen.

Neben Labels mit Barcode setzen sich in letzter Zeit immer mehr Labels mit RFID-Inlays durch. Im Bereich der Logistik handelt es sich dabei wegen der höheren Reichweite fast ausschließlich um UHF-Labels (UHF - Ultrahochfrequenz).

RFID-Labels im UHF-Bereich haben neben dem Vorteil der hohen Lesereichweite aber auch den Nachteil des unscharfen Lesebereiches, der durch die Eigenschaften der Readerantenne und der Labelantenne bestimmt wird.

Im Gegensatz zu den weit verbreiteten Laserscannern zum Lesen von Barcodelabeln, bei denen der Lesebereich durch den Laserstrahl gut zu erkennen ist, ist dies bei UHF-RFID-Lesern nicht der Fall. Hierdurch kann es zum Lesen von Labeln kommen, die nicht gelesen werden sollen.

Viele handelsübliche UHF-Antennen sind elektrische Antennen, die sehr stark durch die Umgebung (Handschuh oder dergleichen) beeinflussbar sind.

Handelsübliche Antennen sind in der Regel Farfield-Antennen, dass heißt hier ist die Erzeugung eines elektromagnetischen Feldes erwünscht. Darüber hinaus werden handelsübliche Antennen angepasst. Unter Anpassung ist beispielsweise eine Leistungsanpassung zu verstehen, damit die Antenne eine maximale Leistung abstrahlt.

Zum Stand der Technik (US 2018/0196978 A1) gehört ein RFID-basierter Handsensor mit einer RFID-Antenne, die in der Lage ist, mit RFID-Transpondern zu kommunizieren. Diese zum Stand der Technik gehörende Vorrichtung in Form eines Handschuhs weist den Nachteil auf, dass die Antenne als eine an die RFID-Leseeinheit angepasste Antenne ausgebildet ist. Die Anpassung ist relativ aufwendig, wodurch der zum Stand der Technik gehörende Handschuh mit dem Handsensor relativ teuer wird.

Zum Stand der Technik (Finkenzeller K.: "RFID-Handbuch, 3-Grundlegende Funktionsweise", RFID-Handbook: Grundlagen und praktische Anwendungen, September 2002 (2002-09-26, Seiten I, 29-31, 34, XP-002337900) ist für ein RFID-System eine induktive Kopplung vorgesehen.

Das der Erfindung zugrunde liegende technische Problem besteht darin, ein RFID-System mit wenigstens einer RFID-Leseeinheit anzugeben, die im Nahfeldbereich Transponder erfassen und auslesen kann und die darüber hinaus preiswert aufgebaut ist.

Dieses technische Problem wird durch ein RFID-System mit den Merkmalen gemäß Anspruch 1 sowie durch ein RFID-System mit den Merkmalen gemäß Anspruch 2 gelöst.

Das erfindungsgemäße RFID-System weist den Vorteil auf, dass die elektrisch leitfähige Leitung der Nahfeldkoppeleinheit eine nicht angepasste elektrisch leitfähige Leitung ist. Es ist keine Antenne vorgesehen, die an die RFID-Leseeinheit angepasst werden muss. Hierdurch können RFID-Leseeinheiten verwendet werden, mit denen ein sogenanntes Miss-Match möglich ist. Im einfachsten Fall kann die elektrisch leitfähige Leitung als einfacher Draht oder als einfache Litze oder als elektrisch leitfähiges Garn oder als elektrisch leitfähiges Gewebe ausgebildet sein.

Eine UHF-RFID-Leseeinheit ist ausreichend, um in einem Nahfeldbereich Transponder zu erfassen. Der reaktive Nahfeldbereich liegt bei 0 Zentimetern bis 5,3 Zentimetern (0 bis λ/2*π*), der strahlende Nahfeldbereich liegt bei 5,3 Zentimetern bis 66 Zentimetern (λ/2*π* bis 2λ), der Fernfeldbereich liegt bei mehr als 66 Zentimetern (größer 2λ). Im vorliegenden Fall liegt der Bereich, in dem die RFID-Leseeinheit Transponder erfasst, bei vorzugsweise 3 bis 10 Zentimetern. Der Bereich kann sich jedoch auf bis zu 20 Zentimetern erstrecken.

Gemäß der Erfindung ist die elektrisch leitfähige Leitung als nicht leistungsangepasste elektrisch leitfähige Leitung ausgebildet. Diese Ausführungsform weist den Vorteil auf, dass eine aufwendige Anpassung eingespart werden kann.

Wie schon ausgeführt, ist eine Anpassung, insbesondere eine Leistungsanpassung an die RFID-Einheit nicht erforderlich.

Bei dem erfindungsgemäßen RFID-System besteht der Vorteil, dass die Waren ohnehin in die Hand genommen werden müssen, um sie an einen anderen Platz zu stellen. Hierbei wird nun gleichzeitig der Vorgang "scannen" mit dem Vorgang "an einen anderen Platz stellen" zu einem gemeinsamen Vorgang vereint.

Die RFID-Leseeinheit wird an der Hand getragen, so dass die RFID-Leseeinheit bei der Arbeit nicht stört.

Da die Waren sowieso angefasst werden müssen, ist eine Nahfeldkoppeleinrichtung vorgesehen, die den Transponder nicht auf große Entfernung, sondern direkt an der Hand liest. Die Reichweite beträgt beispielsweise 3 bis 10 Zentimeter. Die Person fasst hierzu das Paket oder die Ware direkt im Bereich des Transponders an oder streicht mit der Hand über den Transponder, wenn sie das Paket oder die Ware erfassen und an einen anderen Ort stellen möchte.

Bei den beispielsweise 3 bis 10 Zentimetern befindet man sich bei den verwendeten UHF-Frequenzen noch im Nahfeld. In diesem Bereich können auch andere Kopplungsmechanismen zwischen RFID-Leseeinheit und Transponder zur Energie- und Datenübertragung verwendet werden. Bei der vorliegenden erfindungsgemäßen Lösung wird zum einen die kapazitive Kopplung und zum anderen der Übertragungsmechanismus gekoppelter Leitungen verwendet.

Für die kapazitive Kopplung werden zwei Leitungen mit einem differentiellen Signal angesteuert (HF-Trägersignal) (Hochfrequenzträgersignal). Im Idealfall sind beide Leitungen gleich lang, so dass beide Reflexionsstellen am Ende der Leitungen elektrisch gleich weit von der differentiellen Quelle entfernt sind. An den Enden bildet sich das maximale elektrische Feld aus.

Gemäß Anspruch 1 ist ein unsymmetrischer Antennenausgang vorgesehen. In diesem Fall weist die Nahfeldkoppeleinheit einen Balun zur Symmetrierung des unsymmetrischen Signales auf. In diesem Fall liegt eine Speisung mit einem unipolaren Treiber vor. Der Balun ist vorgesehen, um ein differentielles Signal zu erzeugen. Gemäß dem Anspruch 2 ist eine RFID-Leseeinheit mit einem symmetrischen Antennenausgang vorgesehen. Das bedeutet, dass direkt ein differentieller Treiber als Quelle verwendet wird.

Ein Balun ist ein Bauteil zur Wandlung zwischen einem symmetrischen Leitungssystem und einem unsymmetrischen Leitungssystem. Vor allem in der Hochfrequenztechnik wird der Balun auch als Symmetrierglied bezeichnet.

Wie schon ausgeführt, ist die elektrisch leitfähige Leitung vorteilhaft besonders einfach aufgebaut. Sie kann zum Beispiel als Draht oder als Litze oder als elektrisch leitfähiges Garn oder als elektrisch leitfähiges Gewebe ausgebildet sein. Diese elektrischen Leitungen sind sehr einfach aufgebaut und damit preiswert. Sie können in der Vorrichtung zur Anordnung an einer Hand einfach angeordnet werden. Beispielsweise können diese elektrischen Leitungen in der Vorrichtung eingenäht werden oder an die Vorrichtung angenäht werden.

Gemäß einer vorteilhaften Ausführungsform der Erfindung ist die Vorrichtung zur Anordnung an einer Hand als Handschuh mit oder ohne Finger oder als Tragriemen ausgebildet.

Bei dem beschriebenen Naharbeitsfeld werden häufig ohnehin Handschuhe getragen. Aus diesem Grund ist es möglich, die Vorrichtung zur Anordnung an einer Hand als Handschuh mit oder ohne Finger auszubilden. Es besteht auch die Möglichkeit, die Vorrichtung zur Anordnung an einer Hand als Tragriemen auszubilden. Dieser Tragriemen ist vorteilhaft derart ausgebildet, dass der Tragriemen an einer Hand des Trägers angeordnet werden kann. Der Tragriemen kann beispielsweise im Bereich eines Zeigefingers an der Hand lösbar befestigt sein, ebenso kann der Tragriemen im Bereich eines Unterarmes oder Handgelenkes befestigt werden. Der Tragriemen weist hierzu beispielsweise Verschlüsse, insbesondere in der Art von Klettverschlüssen auf.

Gemäß einer weiteren vorteilhaften Ausführungsform der Erfindung ist die wenigstens eine elektrisch leitfähige Leitung in oder an dem Handschuh oder in oder an dem Tragriemen angeordnet. Gemäß einer anderen Ausführungsform ist die wenigstens eine elektrisch leitfähige Leitung in der RFID-Leseeinheit angeordnet.

Eine weitere vorteilhafte Ausführungsform der Erfindung sieht vor, dass das RFID-System wenigstens eine elektrisch leitfähige Leitung
- in oder auf wenigstens einem Finger des Handschuhs oder
- in oder auf einer Handflächenseite des Handschuhs oder des Tragriemens oder
- in oder auf einer Handrückenseite des Handschuhs oder des Tragriemens oder
- in oder auf einer Handseite des Handschuhs oder des Tragriemens oder
- in oder auf einer Fingerseite des Handschuhs oder
- im Bereich eines Handgelenkes des Handschuhs oder des Tragriemens angeordnet ist.

Die wenigstens eine elektrisch leitfähige Leitung kann in den verschiedensten Bereichen des Handschuhs oder des Tragriemens angeordnet sein. Weist der Handschuh Finger auf, ist die wenigstens eine elektrisch leitfähige Leitung in oder auf wenigstens einem Finger des Handschuhs angeordnet. Weist der Handschuh keine Finger auf oder ist ein Tragriemen vorgesehen, kann die wenigstens eine elektrisch leitfähige Leitung in oder auf einer Handflächenseite, in oder auf einer Handrückenseite oder seitlich des Handschuhs oder des Tragriemens oder in oder auf einer Handseite angeordnet sein. Auch eine Anordnung im Bereich eines Handgelenkes des Handschuhs oder des Tragriemens ist möglich. Bei einem Handschuh mit Fingern kann die wenigstens eine elektrisch leitfähige Leitung auf der Fingerunterseite oder seitlich an den Fingern angeordnet sein.

Grundsätzlich ist auch eine Anordnung auf der Oberseite der Finger möglich. Das Signal des Transponders wird jedoch besser erfasst, wenn die wenigstens eine elektrisch leitfähige Leitung seitlich oder an der Fingerunterseite angeordnet ist.

Gemäß einer weiteren vorteilhaften Ausführungsform der Erfindung ist vorgesehen, dass in der wenigstens einen elektrisch leitfähigen Leitung wenigstens ein elektrisch leitfähiges, flächig ausgebildetes Element angeordnet ist, oder dass die wenigstens eine elektrisch leitfähige Leitung wenigstens teilweise flächig ausgebildet ist.

Durch diese Ausbildungsform wird der kapazitive Effekt vergrößert. So können beispielsweise am Ende oder im Verlauf der elektrisch leitfähigen Leitung metallische Plättchen vorgesehen sein, so dass metallische Flächen erzeugt werden. Es besteht aber auch die Möglichkeit, die elektrisch leitfähige Leitung selbst in Teilbereichen flächig auszubilden. Hierzu kann beispielsweise ein im Querschnitt runder Draht abgeflacht werden.

Gemäß einer weiteren vorteilhaften Ausführungsform der Erfindung ist vorgesehen, dass das RFID-System derart ausgebildet ist, dass die wenigstens eine elektrisch leitfähige Leitung kurvenförmig und/oder mäanderförmig und/oder wellenlinienförmig und/oder in Zickzackform und/oder spiralförmig in der Vorrichtung zur Anordnung an einer Hand angeordnet ist.

Durch diese von einer geraden Linie abweichenden Form der Verlegung der elektrisch leitfähigen Leitung bleibt eine Mobilität des Handschuhs oder des Tragriemens erhalten. Die Finger können beispielsweise gekrümmt werden oder die Hand kann zu einer Faust geballt werden, ohne dass die elektrisch leitfähige Leitung ein Hindernis darstellt.

Gemäß einer besonders bevorzugten Ausführungsform der Erfindung ist vorgesehen, dass zwei elektrisch leitfähige Leitungen vorgesehen sind. Hierdurch ist eine RFID-Leseeinheit verwendbar mit einem symmetrischen Antennenausgang. In diesem Fall kann auf die Symmetrierung eines unsymmetrischen Signales verzichtet werden.

Gemäß einer weiteren vorteilhaften Ausführungsform ist vorgesehen, dass die beiden elektrisch leitfähigen Leitungen gleich lang oder zumindest annähernd gleich lang ausgebildet sind.

Gemäß einer vorteilhaften Ausführungsform der Erfindung ist eine Länge der zwei elektrisch leitfähigen Leitungen um maximal 10 Millimeter voneinander abweichend ausgebildet. Hierdurch ist die Länge der zwei elektrischen Leitungen annähernd gleich. Ein Millimeter Längenabweichung entspricht 1,1° bei 900 MHz.

Eine weitere vorteilhafte Ausführungsform der Erfindung sieht vor, dass wenigstens zwei elektrisch leitfähige Leitungen vorgesehen sind und dass die elektrisch leitfähigen Leitungen in verschiedenen Fingern des Handschuhs angeordnet sind. Beispielsweise ist eine elektrisch leitfähige Leitung im Zeigefinger und eine zweite elektrisch leitfähige Leitung im Ringfinger des Handschuhs angeordnet. Es besteht jedoch auch die Möglichkeit, die beiden elektrisch leitfähigen Leitungen in anderen Fingern anzuordnen, beispielsweise im Daumen und im Mittelfinger oder im Daumen und im Ringfinger oder im Zeigefinger und im kleinen Finger.

Die RFID-Leseeinheit ist vorteilhaft als UHF-RFID-Leseeinheit ausgebildet. Eine UHF-RFID-Leseeinheit ist ausreichend, um in einem Nahfeldbereich Transponder zu erfassen. Wie schon ausgeführt, liegt der reaktive Nahfeldbereich bei 0 Zentimetern bis 5,3 Zentimetern (0 bis **λ**/2***π***), der strahlende Nahfeldbereich liegt bei 5,3 Zentimetern bis 66 Zentimetern (**λ**/2***π*** bis 2**λ**). Im vorliegenden Fall liegt der Bereich, in dem die RFID-Leseeinheit Transponder erfasst, bei vorzugsweise 3 bis 10 Zentimetern. Der Bereich kann sich jedoch auf bis zu 20 Zentimetern erstrecken.

Eine weitere vorteilhafte Ausführungsform der Erfindung sieht vor, dass an dem Handschuh oder an dem Tragriemen ein Schalter für die RFID-Leseeinheit vorgesehen ist. Hierdurch ist es möglich, die RFID-Leseeinheit bei Nichtgebrauch abzuschalten, um Strom zu sparen. Hierdurch wird die Betriebszeit der RFID-Leseeinheit, die vorzugsweise von einen Akkumulator mit Strom versorgt wird, verlängert.

Gemäß einer weiteren vorteilhaften Ausführungsform ist vorgesehen, dass zwischen dem Schalter und der RFID-Leseeinheit eine aus Stoff bestehende Verbindungsleitung vorgesehen ist, wobei in dem Stoff elektrisch leitfähiges Material angeordnet ist. Hierdurch ist es möglich, eine die Mobilität des Handschuhs oder des Tragriemens nicht beeinträchtigende Verbindungsleitung auszubilden.

Gemäß einer weiteren vorteilhaften Ausführungsform ist vorgesehen, dass der Schalter als ein aus wenigstens zwei Stofflagen, in denen elektrisch leitfähiges Material angeordnet ist, bestehender Schalter ausgebildet ist. Dieser Schalter ist sehr preiswert herstellbar und integriert sich ebenfalls problemlos in den Handschuh oder in den Tragriemen. Der Schalter ist hierdurch nicht starr, sondern weich ausgebildet und passt sich den Bewegungen der Hand an.

Gemäß einer weiteren vorteilhaften Ausführungsform der Erfindung ist vorgesehen, dass der Handschuh oder der Tragriemen eine Halterung zum lösbaren Haltern der RFID-Leseeinheit aufweist. Die RFID-Leseeinheit kann beispielsweise mit handelsüblichen Druckknöpfen an dem Tragriemen oder dem Handschuh befestigt werden. Die wenigstens eine elektrisch leitfähige Leitung zum Aufbau eines Feldes zur Ankopplung an einen Transponder steht vorteilhaft in elektrischem Kontakt mit dem jeweiligen Druckknopf, der an dem oder den Antennenausgängen der RFID-Leseeinheit angeschlossen ist.

Aufgrund des Aufbaus der wenigstens einen elektrisch leitfähigen Leitung kann diese zum Beispiel in Form von Drähten, Litzen oder dergleichen in dem Handschuh oder dem Tragriemen als Träger eingenäht werden. Ist ein Handschuh mit Fingern vorgesehen, so kann die wenigstens eine elektrisch leitfähige Leitung zum Beispiel bis zu den Fingerspitzen geführt werden. Hierdurch wird eine zuverlässige Erfassung des Signales des Transponders und beispielsweise die Energieversorgung des Transponders gewährleistet.

Liegt ein Handschuh ohne Finger vor oder ein Tragriemen, so kann die wenigstens eine elektrisch leitfähige Leitung beispielsweise zu den Handflächen geführt werden.

Werden zwei elektrisch leitfähige Leitungen verwendet, kann ein weiterer Kopplungseffekt ausgenutzt werden, wenn die Leitungen nebeneinander verlaufend angeordnet sind.

Das erfindungsgemäße RFID-System weist gegenüber dem Stand der Technik den entscheidenden Vorteil auf, dass im Gegensatz zu handelsüblichen Antennen keine Leistungsanpassung zwischen RFID-Lesereinheit und Nahfeldkoppeleinheit vorgenommen werden muss.

Die gemäß der Erfindung vorgesehenen elektrisch leitfähigen Leitungen können in den Handschuh oder in den Tragriemen eingenäht werden, wodurch zum einen der Handschuh oder der Tragriemen sehr beweglich und damit benutzerfreundlich ist und zum anderen der Handschuh oder der Tragriemen sehr preiswert aufgebaut werden kann. Darüber hinaus ist der Handschuh oder der Tragriemen sehr haltbar.

Die Signalübergabe von der RFID-Leseeinheit zu dem Handschuh oder dem Tragriemen kann vorteilhaft über handelsübliche Druckknöpfe erfolgen. Es wird kein spezieller HF-Stecker benötigt.

Gemäß einer weiteren vorteilhaften Ausführungsform weist die RFID-Leseeinheit wenigstens einen Taster für die Betätigung und/oder Einstellung der RFID-Leseeinheit auf. Hierdurch kann die RFID-Leseeinheit über den wenigstens einen Taster gesteuert werden. Es können beispielsweise Einstellungen an der RFID-Leseeinheit vorgenommen werden. Beispielsweise kann ein Betriebsmodus eingestellt werden, oder falls sich das Gerät bei längerer Nichtbenutzung automatisch abschaltet, der Zeitraum bis zum Abschalten. Es besteht auch die Möglichkeit, dass über den wenigstens einen Taster eine Bestätigungsanfrage quittiert wird.

Gemäß einer weiteren vorteilhaften Ausführungsform der Erfindung ist in der RFID-Leseeinheit wenigstens ein Bewegungssensor angeordnet. Die RFID-Leseeinheit erfasst über den Bewegungssensor, ob sie bewegt wird oder nicht. Wird die RFID-Leseeinheit längere Zeit nicht bewegt, schaltet sich die RFID-Leseeinheit automatisch ab. Hierdurch wird die Akkulaufzeit verlängert.

Eine andere vorteilhafte Ausführungsform der Erfindung sieht vor, dass die RFID-Leseeinheit eine Vorrichtung für eine Kommunikation mittels Funk aufweist. Hierdurch ist es möglich, Daten der RFID-Leseeinheit beispielsweise zu einem zentralen Steuergerät über Funk zu übermitteln.

Eine andere vorteilhafte Ausführungsform sieht vor, dass der Schalter und/oder die Verbindungsleitung zwischen dem Schalter und der RFID-Leseeinheit und/oder die Halterung für die RFID-Leseeinheit durch Aufnähen oder Annähen auf oder an dem Handschuh oder dem Tragriemen durchgeführt wird. Diese Art der Verbindung ist besonders einfach und preiswert herzustellen und darüber hinaus besonders dauerhaft und strapazierfähig.

Wird die RFID-Leseeinheit mittels Druckknöpfen an dem Handschuh oder dem Tragriemen befestigt, werden handelsübliche Druckknöpfe verwendet. Vorteilhaft sind die Druccknöpfe in dem Arbeitshandschuh oder in dem Tragriemen eingepresst.

Wie schon ausgeführt, sind, wenn zwei elektrisch leitfähige Leitungen vorgesehen sind, diese vorteilhaft ungefähr gleich lang. Die elektrisch leitfähigen Leitungen werden in diesem Fall 180° phasenverschoben angesprochen.

Gemäß einer weiteren vorteilhaften Ausführungsform der Erfindung ist vorgesehen, dass die RFID-Leseeinheit eine Leistung bis zu 200 mW (Milliwatt) aufweist. Dadurch, dass das erfindungsgemäße RFID-System im Nahfeldbereich arbeitet und lediglich wenigstens eine elektrisch leitfähige Leitung vorgesehen ist, die als nicht angepasste elektrisch leitfähige Leitung ausgebildet ist, reicht eine derartig kleine Leistung der RFID-Leseeinheit aus.

Weitere Merkmale und Vorteile der Erfindung ergeben sich anhand der zugehörigen Zeichnungen, in denen mehrere Ausführungsbeispiele eines erfindungsgemäßen RFID-Systems dargestellt sind, ohne die Erfindung auf diese Ausführungsbeispiele zu beschränken. In den Zeichnungen zeigen:
- Fig. 1: einen Arbeitshandschuh mit einer RFID-Leseeinheit und einer Nahfeldkoppeleinheit auf einem Handrücken;
- Fig. 2: einen Arbeitshandschuh mit einer RFID-Leseeinheit und einer Nahfeldkoppeleinheit auf dem Handrücken, dargestellt mit einem Transponder mit kapazitiver Kopplung;
- Fig. 3: einen Arbeitshandschuh mit einer RFID-Leseeinheit und einer Nahfeldkoppeleinheit auf dem Handrücken mit einem Transponder mit einer Leitungskopplung;
- Fig. 4: eine Nahfeldkoppeleinheit auf einer Handunterseite eines Handschuhs ohne Finger;
- Fig. 5: eine schematische Darstellung einer RFID-Leseeinheit mit asymmetrischem Ausgang;
- Fig. 6: eine schematische Darstellung einer RFID-Leseeinheit mit symmetrischem Ausgang;
- Fig. 7: eine Hand mit einem Tragriemen in Ansicht in Richtung Handrücken;
- Fig. 8: eine Hand mit einem Tragriemen in Ansicht in Richtung Handfläche;
- Fig. 9: eine Halterung für die RFID-Leseeinheit im Querschnitt;
- Fig. 10: eine Halterung für die RFID-Leseeinheit mit Druckknopf;

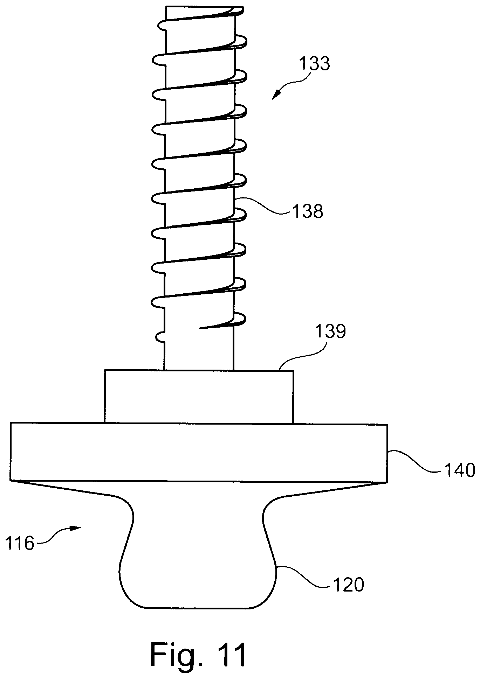

- Fig. 11: einen Teil des Druckknopfes gemäß Fig. 10 in Seitenansicht;
- Fig. 12: eine Verbindungsleitung mit elektrisch leitfähiger Litze in Draufsicht;
- Fig. 13: eine Verbindungsleitung mit mäanderförmig angeordneter elektrischer Leitung in Draufsicht;
- Fig. 14: eine Verbindungsleitung mit zickzackförmig angeordneter elektrischer Leitung in Draufsicht;
- Fig. 15: eine schematische Darstellung von Feldstärken der Drähte 4, 5;
- Fig. 16: eine elektrisch leitfähige Verbindungsleitung mit metallischen Flächen.

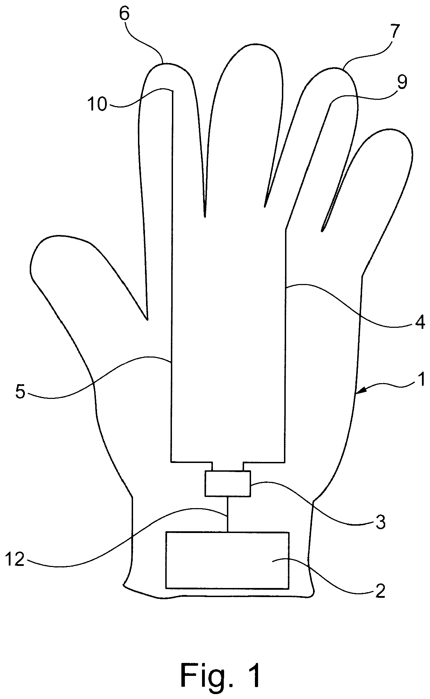

Fig. 1 zeigt einen Arbeitshandschuh 1, an dem eine RFID-Leseeinheit 2 lösbar angeordnet ist. Bei der in Fig. 1 dargestellten RFID-Leseeinheit 2 handelt es sich um eine RFID-Leseeinheit mit einem unsymmetrischen Ausgang. Aus diesem Grunde ist zur Symmetrierung des Signales ein Balun 3 vorgesehen. Darüber hinaus sind in dem Handschuh 2 zwei Drähte 4, 5 angeordnet, die vorteilhaft in den Handschuh 1 eingenäht oder eingewebt sind. Die Drähte führen in einen Zeigefinger 6 und einen Ringfinger 7. Die Drähte 4, 5 können jedoch auch an anderen Fingern des Handschuhs 1 angeordnet sein.

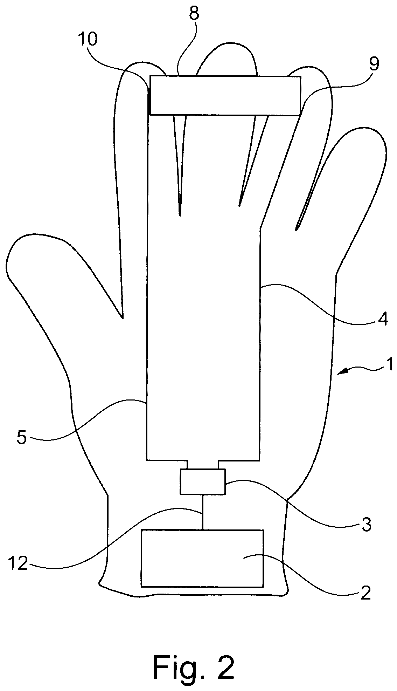

Gemäß Fig. 2 ist der Handschuh 1 dargestellt mit der RFID-Leseeinheit 2, dem Balun 3 und den Drähten 4, 5. Zusätzlich ist ein Transponder 8 dargestellt. In dem in Fig. 2 dargestellten Fall liegt eine kapazitive Kopplung vor. Für die kapazitive Kopplung werden die zwei Leitungen 4, 5 mit einem differentiellen Signal angesteuert (HF-Trägersignal). Die Leitungen 4, 5 sind gleich lang, so dass beide Reflexionsstellen an Enden 9, 10 der elektrisch leitfähigen Leitungen 4, 5 elektrisch gleich weit von der differentiellen Quelle entfernt sind. An den Enden 9, 10 bildet sich das maximale elektrische Feld aus. Hierdurch kann das Signal des Transponders 8 erfasst werden und der Transponder 8 kann ausgelesen werden, so dass die Informationen des Transponders 8 von der RFID-Leseeinheit 2 erfasst werden können. Gleichzeitig wird der Transponder 8 mit Energie versorgt, damit der Transponder auch bei weiteren Auslesevorgängen mit einer RFID-Leseeinheit kommunizieren kann.

Der Transponder 8 ist vorteilhaft unmittelbar an einer Ware (nicht dargestellt), einem Paket, einer Transportkiste oder dergleichen (nicht dargestellt) angeordnet. Der Handschuh 1 wird mit den Enden 9, 10 der Leitungen 4, 5 in unmittelbare Nähe des Transponders 8 gebracht, so dass der Transponder 8 im Nahfeld ausgelesen werden kann.

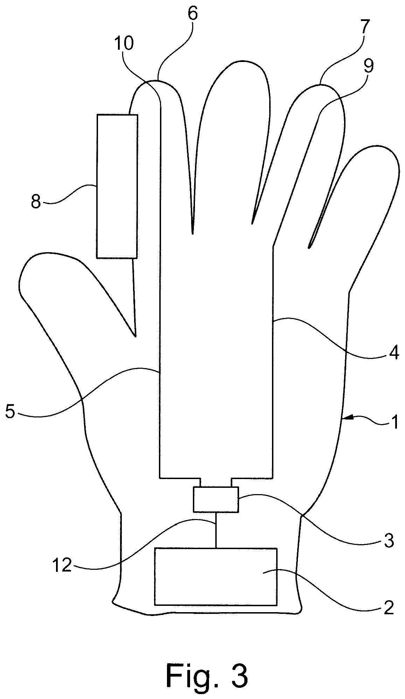

Fig. 3 zeigt ein Ausführungsbeispiel mit einer Leitungskopplung. Bei der in Fig. 3 dargestellten Leitungskopplung sind die elektrisch leitfähigen Leitungen 4, 5 idealerweise parallel oder annähernd parallel angeordnet. Es besteht jedoch auch die Möglichkeit, dass die elektrisch leitfähigen Leitungen 4, 5 in gleicher oder ähnlicher Richtung ausgerichtet sind. Gleiche Richtung bedeutet, dass die Leitungen 4, 5 nicht orthogonal zueinander angeordnet sind.

Der Transponder 8 kann auch in der Fig. 3 dargestellten Lage von der RFID-Leseeinheit 2 ausgelesen werden.

Aufgrund der kurzen Entfernung zwischen dem Transponder 8 und den elektrisch leitfähigen Leitungen 4, 5, die in den Fig. 1 bis 3 als einfache Drähte ausgebildet sind, kann der Transponder 8 ohne weiteres von der RFID-Leseeinheit 2 ausgelesen werden. Die Drähte 4, 5 müssen nicht an die RFID-Leseeinheit 2 angepasst, das heißt leistungsangepasst werden. Die Drähte 4, 5 sind vorteilhaft ungefähr gleich lang und werden 180° phasenverschoben angesprochen.

An den Enden 9, 10 der Drähte 4, 5 liegen relativ gro-βe elektromagnetische Felder an, so dass in diesen Bereichen Transponder 8 gut ausgelesen werden können, das heißt, dass in diesen Bereichen eine Kommunikation mit den Transpondern 8 sehr gut möglich ist.

Die RFID-Leseeinheit 2 ist derart ausgebildet, dass nicht angepasste Drähte 4, 5 an der RFID-Leseeinheit 2 angeordnet werden können. Die RFID-Leseeinheit 2 weist relativ kleine Leistungen auf.

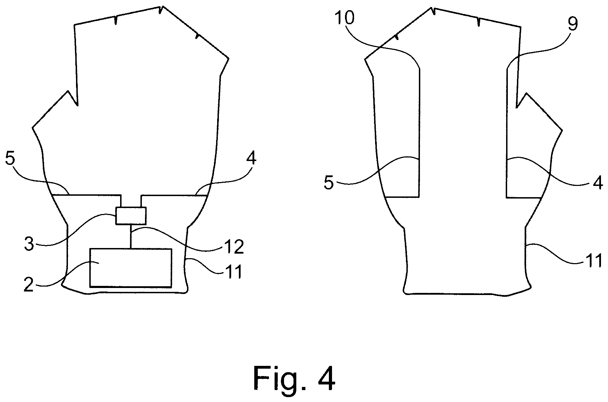

Gemäß Fig. 4 ist ein Handschuh 11 dargestellt. In der linken Darstellung ist eine Draufsicht auf eine Handoberseite gezeigt, in der rechten Darstellung ist eine Draufsicht auf eine Handunterseite gezeigt. Der Handschuh 11 weist keine Finger auf. An dem Handschuh 11 ist die RFID-Leseeinheit 2 angeordnet sowie der Balun 3. Zwischen der RFID-Leseeinheit 2 und dem Balun 3 ist eine elektrisch leitfähige Verbindungsleitung 12 vorgesehen. Von dem Balun ausgehend sind die Drähte 4, 5 an dem Handschuh 11 angeordnet. In der rechten Darstellung, die die Unterseite des Handschuhs 11 darstellt, sind die Drähte 4, 5 an einer Handflächenseite angeordnet. Die Enden 9, 10 der Drähte 4, 5 sind ebenfalls im Handflächenbereich des Handschuhs 11 angeordnet. Beim Anfassen eines Gegenstandes (in Fig. 4 nicht dargestellt), werden die Enden 9, 10 der Drähte 4, 5 in unmittelbare Nähe des Transponders 8 gebracht und hierdurch kann die Information aus dem Transponder 8 ausgelesen werden.

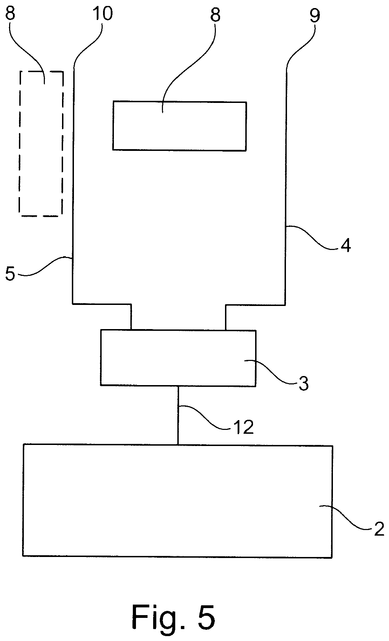

Fig. 5 veranschaulicht noch einmal eine RFID-Leseeinheit 2, die über eine elektrisch leitfähige Verbindungsleitung 12 mit einem Balun 3 verbunden ist. Mit dem Balun 3 sind die elektrisch leitfähigen Leitungen 4, 5 verbunden, die die Enden 9, 10 aufweisen. Der Transponder 8, der mit einer durchgezogenen Linie dargestellt ist, ist derart ausgerichtet, dass eine kapazitive Kopplung stattfindet. Der gestrichelt dargestellte Transponder 8 ist in einer Ausrichtung angeordnet, dass eine Leitungskopplung stattfindet.

Der Balun 3 ist ein Bauteil zur Wandlung zwischen einem symmetrischen Leitungssystem und einem unsymmetrischen Leitungssystem. Vor allem in der Hochfrequenztechnik wird der Balun 3 auch als Symmetrierglied bezeichnet.

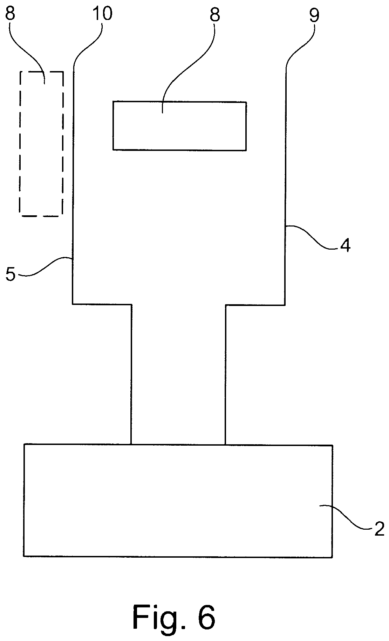

Gemäß Fig. 6 ist eine RFID-Leseeinheit 2 mit einem symmetrischen Ausgang dargestellt. In diesem Fall sind die elektrisch leitfähigen Leitungen 4, 5 unmittelbar an der RFID-Leseeinheit 2 angeordnet. Auch in Fig. 6 ist mit der durchgezogenen Linie ein Transponder 8 dargestellt, mit dem eine kapazitive Kopplung stattfindet. Gestrichelt dargestellt ist ein Transponder 8, mit dem eine Leitungskopplung stattfindet.

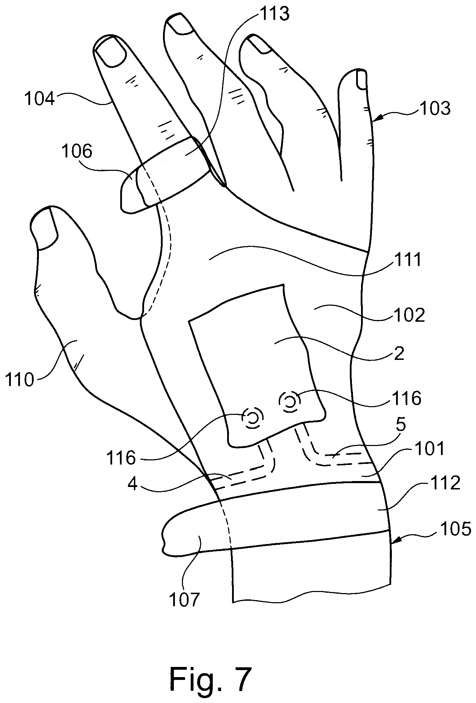

Fig. 7 zeigt eine Vorrichtung 101, die als Tragriemen 102 ausgebildet ist und an einer Hand 103 eines Trägers angeordnet ist. Der Tragriemen 102 ist im Bereich eines Zeigefingers 104 an der Hand 103 lösbar befestigt. Ebenso ist der Tragriemen 102 im Bereich eines Unterarmes oder Handgelenkes 105 befestigt. Der Tragriemen 102 weist hierzu Verschlüsse 106, 107, die beispielsweise als Klettverschlüsse ausgebildet sind, auf. An dem Tragriemen 102 ist eine RFID-Leseeinheit 2 angeordnet.

Mit der RFID-Leseeinheit 2 können Waren (nicht dargestellt), die beispielsweise von Hand aufgenommen und wieder abgelegt werden, elektronisch erfasst werden. Es besteht beispielsweise die Möglichkeit, dass die Ware einen Transponder aufweist, der von der RFID-Leseeinheit 2 erfasst werden kann.

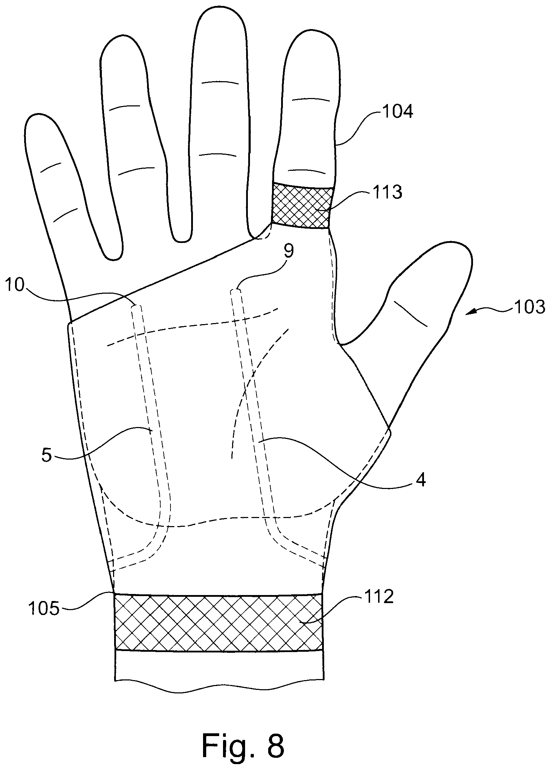

Von der RFID-Leseeinheit 2 führen elektrisch leitfähige Leitungen 4, 5 zu einer Handunterseite, die in Fig. 8 dargestellt ist. Da der Tragriemen 102 keine Finger aufweist, sind Enden 9, 10 der elektrisch leitfähigen Leitungen 4, 5 im Bereich der Handfläche der Hand 103 angeordnet.

Der Tragriemen 102 ist überwiegend aus Stoff gebildet. Lediglich die Verschlüsse 106, 107 sind als Klettverschlüsse mit einem Flausch- und einem gegenüberliegend angeordneten Hakenband ausgebildet. Die Verbindungsleitung 111 ist ebenfalls aus Stoff gebildet und in dem Stoff sind elektrisch leitfähige Materialien angeordnet.

Die RFID-Leseeinheit 2 kann in einer Stofftasche, die noch näher beschrieben wird, angeordnet sein.

Die Vorrichtung 101 wird für die Durchführung der Scanvorgänge mit der RFID-Leseeinheit an der Hand 103 angeordnet. Die Transponder 8 können mit der RFID-Leseeinheit 2 erfasst werden.

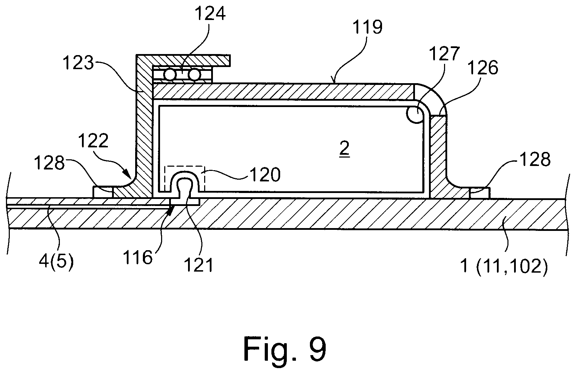

Die RFID-Leseeinheit 2 kann von dem Tragriemen 102 entfernt werden, indem sie aus der in Fig. 9 noch näher beschriebenen Halterung entnommen wird. Der Tragriemen 102 kann dann gewaschen oder gereinigt werden.

Der Tragriemen 102 wird mit einer Schlaufe 112 am Handgelenk oder Unterarm 105 angeordnet und mit dem Verschluss 107 größenverstellbar, das heißt angepasst an die Trägerperson verschlossen. Darüber hinaus ist der Tragriemen 102 mit einer Schlaufe 113 am Zeigefinger befestigt. Auch diese Schlaufe 113 ist größenverstellbar durch den Verschluss 106 an die Trägerperson anpassbar.

Die RFID-Leseeinheit 2 weist Druckknöpfe 116, über die eine elektrisch leitfähige Verbindung mit den elektrisch leitfähigen Leitungen 4, 5 hergestellt wird.

Gemäß Fig. 8 ist die Hand 103 in Ansicht in Richtung Handfläche dargestellt. Die Schlaufen 112, 113 des Tragriemens 102 umschließen den Unterarm oder das Handgelenk 105 ebenso den Zeigefinger 104.

Fig. 9 zeigt einen Teil des Handschuhs 1, des Handschuhs 11 oder des Tragriemens 102. Auf dem Handschuh 1 oder dem Handschuh 11 oder dem Tragriemen 102 ist eine Stofftasche 119 angeordnet. In der Stofftasche 119 ist die RFID-Leseeinheit 2 angeordnet. Die RFID-Leseeinheit 2 weist einen ersten Teil 120 (weiblich) eines Druckknopfes 116 auf. In dem Handschuh 1 oder dem Handschuh 11 oder dem Tragriemen 102 ist ein zweiter Teil 121 (männlich) des Druckknopfes 116, das heißt das Gegenstück zu dem ersten Teil 120 (weiblich) vorgesehen. Die beiden Teile 120, 121 des Druckknopfes 116 sind in Kontakt gebracht, so dass die RFID-Leseeinheit 2 zum einen über den Druckknopf 116 und zum anderen in der Stofftasche 119 an dem Tragriemen 102 oder dem Arbeitshandschuh 1, 11 fixiert wird. Die Stofftasche 119 umschließt die RFID-Leseeinheit 2 bis auf eine Vorderseite 122. In diesem Bereich ist eine Lasche 123 vorgesehen, die ebenfalls mit einem Verschluss, der beispielsweise als Klettverschluss 124 ausgebildet ist, verschlossen werden kann.

In der Stofftasche 119 ist darüber hinaus eine Öffnung 126 vorgesehen. Die Öffnung 126 korrespondiert mit einer LED der RFID-Leseeinheit 2, so dass die LED von außen erkennbar ist. Es kann im Bereich der Öffnung 126 auch ein Schalter (nicht dargestellt) in der RFID-Leseeinheit 2 angeordnet sein.

Die Stofftasche 119 wie auch die Lasche 123 sind mittels Nähten 128 an dem Handschuh 1 oder dem Handschuh 11 oder dem Tragriemen 102 befestigt.

Der zweite Teil 121 (männlicher Teil) des Druckknopfes 116 kann in dem Handschuh 1 oder dem Handschuh 11 oder dem Tragriemen 102 eingepresst sein. Es können Druckknöpfe 116 mit Zackenring verwendet werden, die mit den elektrisch leitfähigen Leitungen 4, 5 in einfacher Art und Weise verbunden werden können.

Wie in Fig. 9 zu erkennen ist, ist der erste Teil 120 (weiblicher Teil) des Druckknopfes 116 in der RFID-Leseeinheit 2 versenkt angeordnet. Hierdurch wird die Gesamthöhe der RFID-Leseeinheit reduziert. Darüber hinaus ist noch eine zusätzliche Führung für den zweiten Teil 121 (männlicher Teil) des Druckknopfes 116 gegeben.

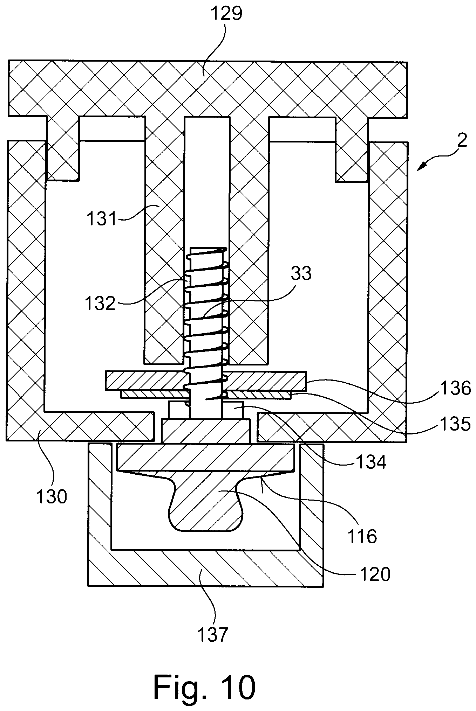

Gemäß Fig. 10 ist die RFID-Leseeinheit 2 dargestellt, welche eine obere Gehäuseschale 129 und eine untere Gehäuseschale 130 aufweist. Die obere Gehäuseschale 129 weist einen Zapfen 130 mit einem Innengewinde 131 auf. In das Innengewinde 131 greift eine Schraube 133, die durch den ersten Teil 120 des Druckknopfes 116 greift. Darüber hinaus ist eine Federscheibe 134 vorgesehen sowie eine Kontaktfläche 135 einer Leiterplatte 136. Über den ersten Teil 120 des Druckknopfes 116 kann damit zum einen eine elektrisch leitfähige Verbindung zu der Leiterplatte 136 hergestellt werden. Zum anderen greift die Schraube 133 in das Innengewinde 132 des Zapfens 131 der oberen Gehäuseschale 129, so dass die obere Gehäuseschale 129 und die untere Gehäuseschale 130 der RFID-Leseeinheit 2 lösbar fest miteinander verbunden werden. Die Schraube 133 kann mittels eines Werkzeuges, beispielsweise eines Steckschlüssels 137 betätigt werden.

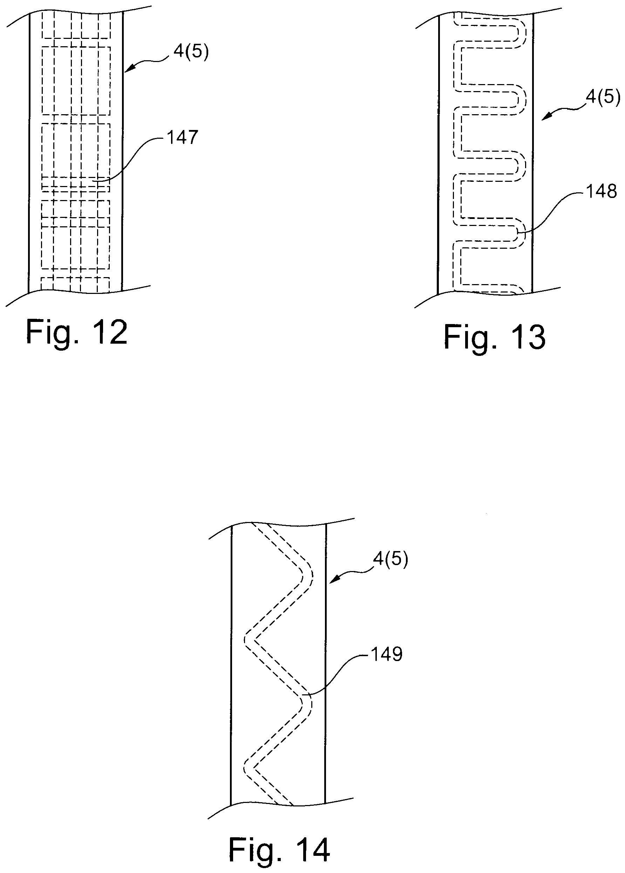

Fig. 12 zeigt die Schraube 133 mit einem Gewinde 138. Die Schraube 133 weist ebenfalls eine Kontaktfläche 139 auf, um einen elektrischen Kontakt mit der Kontaktfläche 135 der Leiterplatte 136 herzustellen. Darüber hinaus ist ein Werkzeugansatz 140 vorgesehen, um die Schraube 133 mit einem Werkzeug 137 betätigen zu können. Darüber hinaus ist ein erster Teil des Druckknopfes 116 an der Schraube 133 angeordnet.

Beispiele für die Ausbildung von elektrisch leitfähigen Leitungen 4, 5 sind in den Fig. 12 bis 14 dargestellt.

In Fig. 12 ist die Ausbildung als Geflecht 147 mit Litzen dargestellt.

In Fig. 13 ist eine elektrisch leitfähige Leitung 148 mäanderförmig in der Leitung 4, 5 angeordnet.

Gemäß Fig. 14 ist eine elektrisch leitfähige Leitung 149 in der Leitung 4, 5 zickzackförmig angeordnet.

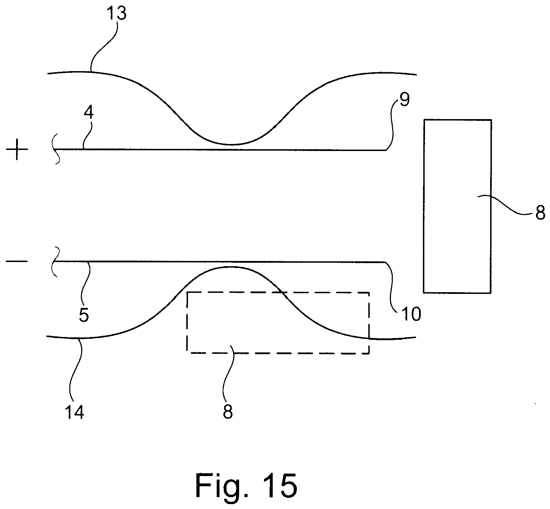

Fig. 15 zeigt die Drähte 4, 5 mit den Enden 9, 10. Schematisch sind Feldstärken 13, 14 der Drähte 4, 5 dargestellt. Der Verlauf der Feldstärke 13 des elektrischen Feldes des Drahtes 4 zeigt, dass ungefähr in der Mitte des Leiters 4 ein Minimum der Feldstärke liegt, während am Ende 9 des Leiters 4 ein Maximum der Feldstärke liegt. Gleiches gilt für den schematisch dargestellten Verlauf der Feldstärke 14 des Drahtes 5.

An den Enden 9, 10 der Drähte 4, 5 ist die Feldstärke sehr groß. Aus diesem Grunde lässt sich in diesem Bereich der mit durchgehender Linie dargestellte Transponder 8 über die kapazitive Kopplung oder der gestrichelt dargestellte Transponder 8 über eine Leitungskopplung sehr gut auslesen.

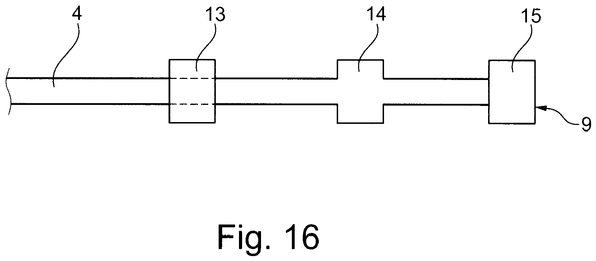

Fig. 16 zeigt den Draht 4. An dem Draht 4 sind zur Vergrößerung des kapazitiven Effektes metallische Flächen vorgesehen. Eine metallische Fläche 13 besteht aus einem Metallplättchen, welches an dem Draht 4 angeordnet, beispielsweise angelötet ist. Eine metallische Fläche 14 ist unmittelbar aus dem Draht 4 ausgebildet. Eine metallische Fläche 15 ist ebenfalls aus dem Draht ausgebildet und bildet das Ende 9 des Drahtes 4.

Die metallischen Flächen 14, 15, die unmittelbar aus dem Draht 4 ausgebildet sind, können durch eine Veränderung eines runden Querschnittes des Drahtes 4, beispielsweise eine Abflachung ausgebildet sein.

### Bezugszahlen

- 1: Handschuh
- 2: RFID-Leseeinheit
- 3: Balun
- 4: Draht
- 5: Draht
- 6: Zeigefinger
- 7: Ringfinger
- 8: Transponder
- 9: Ende des Drahtes 4
- 10: Ende des Drahtes 5
- 11: Handschuh
- 12: Verbindungsleitung
- 13: metallische Fläche
- 14: metallische Fläche
- 15: metallische Fläche
- 101: Vorrichtung
- 102: Tragriemen
- 103: Hand
- 104: Zeigefinger
- 105: Unterarm/Handgelenk
- 106: Verschluss
- 107: Verschluss
- 110: Daumen
- 111: Verbindungsleitung
- 112: Schlaufe
- 113: Schlaufe
- 115: Öffnung
- 116: Druckknöpfe
- 118: Lasche
- 119: Stofftasche
- 120: erster Teil des Druckknopfes 16
- 121: zweiter Teil des Druckknopfes 16
- 122: Vorderseite der Tasche 19
- 123: Lasche
- 124: Verschluss
- 126: Öffnung
- 128: Nähte
- 129: obere Gehäuseschale
- 130: untere Gehäuseschale
- 131: Zapfen
- 132: Innengewinde
- 133: Schraube
- 134: Federscheibe
- 135: Kontaktfläche Leiterplatte
- 136: Leiterplatte
- 137: Werkzeug
- 138: Gewinde
- 139: Kontaktfläche
- 140: Werkzeugansatz
- 147: elektrisch leitfähige Leitung
- 148: elektrisch leitfähige Leitung
- 149: elektrisch leitfähige Leitung

## Patentansprüche

1. RFID-System mit wenigstens einer RFID-Leseeinheit (2) und einer Vorrichtung (1, 11, 102), bei der die wenigstens eine RFID-Leseeinheit (2) einen unsymmetrischen Antennenausgang aufweist,
- wobei die wenigstens eine RFID-Leseeinheit (2) an der Vorrichtung (1, 11, 102) zur Anordnung an einer Hand (103) anordbar ist,
- und wobei die Vorrichtung (1, 11, 102) zur Anordnung an einer Hand (103) als Handschuh (1, 11) mit oder ohne Finger oder als Tragriemen (102) ausgebildet ist,
**dadurch gekennzeichnet,**
- **dass** das RFID-System eine kapazitive Nahfeldkoppeleinheit aufweist, die einen Balun (3) zur Symmetrierung eines unsymmetrischen Signales aufweist, und die wenigstens eine elektrisch leitfähige Leitung (4, 5) der Nahfeldkoppeleinheit zum Aufbau eines Feldes zur Ankopplung an einen Transponder (8) aufweist,
- und **dass** die wenigstens eine elektrisch leitfähige Leitung (4, 5) der Nahfeldkoppeleinheit als nicht leistungsangepasste elektrisch leitfähige Leitung (4, 5) ausgebildet ist,
- und **dass** die wenigstens eine elektrisch leitfähige Leitung (4, 5) in oder an dem Handschuh (1, 11) oder in oder an dem Tragriemen (102) angeordnet ist.

2. RFID-System mit wenigstens einer RFID-Leseeinheit (2) und einer Vorrichtung (1, 11, 102), bei der die wenigstens eine RFID-Leseeinheit (2) einen symmetrischen Antennenausgang aufweist,
- wobei die wenigstens eine RFID-Leseeinheit (2) an der Vorrichtung (1, 11, 102) zur Anordnung an einer Hand (103) anordbar ist,
- und wobei die Vorrichtung (1, 11, 102) zur Anordnung an einer Hand (103) als Handschuh (1, 11) mit oder ohne Finger oder als Tragriemen (102) ausgebildet ist,
**dadurch gekennzeichnet ,**
- **dass** das RFID-System eine kapazitive Nahfeldkoppeleinheit aufweist, die wenigstens eine elektrisch leitfähige Leitung (4, 5) der Nahfeldkoppeleinheit zum Aufbau eines Feldes zur Ankopplung an einen Transponder (8) aufweist,
- und **dass** die wenigstens eine elektrisch leitfähige Leitung (4, 5) der Nahfeldkoppeleinheit als nicht leistungsangepasste elektrisch leitfähige Leitung (4, 5) ausgebildet ist,
- und **dass** die wenigstens eine elektrisch leitfähige Leitung (4, 5) in oder an dem Handschuh (1, 11) oder in oder an dem Tragriemen (102) angeordnet ist.

3. RFID-System nach einem der vorhergehenden Ansprüche, **dadurch gekennzeichnet, dass** die elektrisch leitfähige Leitung (4, 5) als Draht oder als Litze (147) oder als elektrisch leitfähiges Garn oder als elektrisch leitfähiges Gewebe ausgebildet ist.

4. RFID-System nach einem der vorhergehenden Ansprüche, **dadurch gekennzeichnet, dass** die wenigstens eine elektrisch leitfähige Leitung (4, 5) an oder in dem Handschuh (1, 11) oder an oder in dem Tragriemen (102) angeordnet ist oder dass die wenigstens eine elektrisch leitfähige Leitung (4, 5) in der RFID-Leseeinheit (2) angeordnet ist.

5. RFID-System nach einem der vorhergehenden Ansprüche, **dadurch gekennzeichnet, dass** die wenigstens eine elektrisch leitfähige Leitung (4, 5)
- in oder auf wenigstens einem Finger (6, 7) des Handschuhs (1, 11) oder
- in oder auf einer Handflächenseite des Handschuhs (1, 11) oder des Tragriemens (102) oder
- in oder auf einer Handrückenseite des Handschuhs (1, 11) oder des Tragriemens (102) oder
- in oder auf einer Handseite des Handschuhs (1, 11) oder des Tragriemens (102) oder
- in oder auf einer Fingerseite des Handschuhs (1, 11) oder
- im Bereich eines Handgelenks des Handschuhs (1, 11) oder des Tragriemens (102) angeordnet ist.

6. RFID-System nach einem der vorhergehenden Ansprüche, **dadurch gekennzeichnet, dass** in der wenigstens einen elektrisch leitfähigen Leitung (4, 5) wenigstens ein elektrisch leitfähiges flächig ausgebildetes Element (13) angeordnet ist, oder dass die wenigstens eine elektrisch leitfähige Leitung (4, 5) wenigstens teilweise als flächiges Element (14, 15) ausgebildet ist.

7. RFID-System nach einem der vorhergehenden Ansprüche, **dadurch gekennzeichnet, dass** die wenigstens eine elektrisch leitfähige Leitung (4, 5) kurvenförmig und/oder mäanderförmig und/oder wellenlinienförmig und/oder in Zickzackform und/oder spiralförmig in der Vorrichtung (1, 11, 102) zur Anordnung an einer Hand (103) angeordnet ist.

8. RFID-System nach einem der vorhergehenden Ansprüche, **dadurch gekennzeichnet, dass** zwei elektrisch leitfähige Leitungen (4, 5) vorgesehen sind.

9. RFID-System nach einem der vorhergehenden Ansprüche, **dadurch gekennzeichnet, dass** eine Länge der zwei elektrisch leitfähigen Leitungen (4, 5) um maximal 10 Millimeter voneinander abweichend ist.

10. RFID-System nach einem der vorhergehenden Ansprüche, **dadurch gekennzeichnet, dass** wenigstens zwei elektrisch leitfähige Leitungen (4, 5) vorgesehen sind und dass die elektrisch leitfähigen Leitungen (4, 5) in verschiedenen Fingern (6, 7) des Handschuhs (1, 11) angeordnet sind.

11. RFID-System nach einem der vorhergehenden Ansprüche, **dadurch gekennzeichnet, dass** die RFID-Leseeinheit (2) als UHF-RFID-Leseeinheit ausgebildet ist.

12. RFID-System nach einem der vorhergehenden Ansprüche, **dadurch gekennzeichnet, dass** der Handschuh (1, 11) oder der Tragriemen (102) eine Halterung zum lösbaren Haltern der RFID-Leseeinheit (2) aufweist.

13. RFID-System nach einem der vorhergehenden Ansprüche, **dadurch gekennzeichnet, dass** die RFID-Leseeinheit eine Leistung (1) bis zu 200 Milliwatt aufweist.

## Claims

1. RFID system comprising at least one RFID reader unit (2) and a device (1, 11, 102), in which the at least one RFID reader unit (2) has an unbalanced antenna output,
- the at least one RFID reader unit (2) being arrangeable on the device (1, 11, 102) for arrangement on a hand (103),
- and the device (1, 11, 102) for arrangement on a hand (103) being in the form of a glove (1, 11) with or without fingers or in the form of a strap (102),
**characterised in that**
- the RFID system comprises a capacitive near-field coupling unit, which has a balun (3) for balancing an unbalanced signal, and comprises at least one electrically conductive line (4, 5) of the near-field coupling unit in order to create a field for coupling to a transponder (8),
- and **in that** the at least one electrically conductive line (4, 5) of the near-field coupling unit is in the form of a non-performance-adapted electrically conductive line (4, 5),
- and **in that** the at least one electrically conductive line (4, 5) is arranged in or on the glove (1, 11) or in or on the strap (102).

2. RFID system comprising at least one RFID reader unit (2) and a device (1, 11, 102), in which the at least one RFID reader unit (2) has a balanced antenna output,
- the at least one RFID reader unit (2) being arrangeable on the device (1, 11, 102) for arrangement on a hand (103),
- and the device (1, 11, 102) for arrangement on a hand (103) being in the form of a glove (1, 11) with or without fingers or in the form of a strap (102),
**characterised in that**
- the RFID system comprises a capacitive near-field coupling unit, which comprises at least one electrically conductive line (4, 5) of the near-field coupling unit in order to create a field for coupling to a transponder (8),
- and **in that** the at least one electrically conductive line (4, 5) of the near-field coupling unit is in the form of a non-performance-adapted electrically conductive line (4, 5),
- and **in that** the at least one electrically conductive line (4, 5) is arranged in or on the glove (1, 11) or in or on the strap (102).

3. RFID system according to any of the preceding claims, **characterised in that** the electrically conductive line (4, 5) is in the form of a wire or a stranded wire (147) or in the form of an electrically conductive yarn or in the form of an electrically conductive fabric.

4. RFID system according to any of the preceding claims, **characterised in that** the at least one electrically conductive line (4, 5) is arranged on or in the glove (1, 11) or on or in the strap (102), or **in that** the at least one electrically conductive line (4, 5) is arranged in the RFID reader unit (2).

5. RFID system according to any of the preceding claims, **characterised in that** the at least one electrically conductive line (4, 5) is arranged
- in or on at least one finger (6, 7) of the glove (1, 11) or
- in or on a palm side of the glove (1, 11) or of the strap (102) or
- in or on a back side of the glove (1, 11) or of the strap (102) or
- in or on a hand side of the glove (1, 11) or of the strap (102) or
- in or on a finger side of the glove (1, 11) or in the region of a wrist of the glove (1, 11) or of the strap (102).

6. RFID system according to any of the preceding claims, **characterised in that** at least one electrically conductive planar element (13) is arranged in the at least one electrically conductive line (4, 5), or **in that** the at least one electrically conductive line (4, 5) is in the form of a planar element (14, 15) at least in part.

7. RFID system according to any of the preceding claims, **characterised in that** the at least one electrically conductive line (4, 5) is arranged in the device (1, 11, 102) for arrangement on a hand (103) in the manner of a curve and/or meander and/or wavy line and/or zigzag and/or spiral.

8. RFID system according to any of the preceding claims, **characterised in that** two electrically conductive lines (4, 5) are provided.

9. RFID system according to any of the preceding claims, **characterised in that** the lengths of the two electrically conductive lines (4, 5) differ from one another by at most 10 millimetres.

10. RFID system according to any of the preceding claims, **characterised in that** at least two electrically conductive lines (4, 5) are provided, and **in that** the electrically conductive lines (4, 5) are arranged in different fingers (6, 7) of the glove (1, 11).

11. RFID system according to any of the preceding claims, **characterised in that** the RFID reader unit (2) is in the form of a UHF RFID reader unit.

12. RFID system according to any of the preceding claims, **characterised in that** the glove (1, 11) or the strap (102) comprises a mount for releasably holding the RFID reader unit (2).

13. RFID system according to any of the preceding claims, **characterised in that** the RFID reader unit has a power (1) of up to 200 milliwatts.

## Revendications

1. Système RFID avec au moins une unité de lecture RFID (2) et un dispositif (1, 11, 102), dans lequel l'au moins une unité de lecture RFID (2) présente une sortie d'antenne asymétrique,
- dans lequel la au moins une unité de lecture RFID (2) peut être disposée sur le dispositif (1, 11, 102) pour être disposée sur une main (103),
- et dans lequel le dispositif (1, 11, 102) destiné à être disposé sur une main (103) est réalisé sous forme de gant (1, 11) avec ou sans doigts ou sous forme de sangle de transport (102),
**caractérisé en ce que**
le système RFID comprend une unité de couplage de champ proche capacitif ou un couplage de ligne, qui a un symétriseur (3) pour équilibrer un signal asymétrique, et la au moins une ligne électriquement conductrice (4, 5) de l'unité de couplage de champ proche pour constituer un champ pour le couplage à un transpondeur (8),
- et **en ce que** la au moins une ligne électriquement conductrice (4, 5) de l'unité de couplage de champ proche est réalisée sous la forme d'une ligne électriquement conductrice (4, 5) non adaptée,
et **en ce que** la au moins une ligne électriquement conductrice (4, 5) est disposée sur ou dans le gant (1, 11) ou sur ou dans la sangle de portage (102).

2. Système RFID avec au moins une unité de lecture RFID (2) et un dispositif (1, 11, 102),
dans lequel l'au moins une unité de lecture RFID (2) présente une sortie d'antenne symétrique,
dans lequel la au moins une unité de lecture RFID (2) peut être disposée sur le dispositif (1, 11, 102) pour être disposée sur une main (103),
et dans lequel le dispositif (1, 11, 102) destiné à être disposé sur une main (103) est réalisé sous forme de gant (1, 11) avec ou sans doigts ou sous forme de sangle de transport (102),
**caractérisé en ce que**
- le système RFID présente une unité de couplage de champ proche capacitif ou un couplage de ligne qui présente au moins une ligne électriquement conductrice (4, 5) de l'unité de couplage de champ proche pour créer un champ pour le couplage à un transpondeur (8),
- et **en ce que** la au moins une ligne électriquement conductrice (4, 5) de l'unité de couplage de champ proche est réalisée sous la forme d'une ligne électriquement conductrice (4, 5) non adaptée,
et **en ce que** la au moins une ligne électriquement conductrice (4, 5) est disposée sur ou dans le gant (1, 11) ou sur ou dans la sangle de portage (102).

3. Système RFID selon l'une des revendications précédentes, **caractérisé en ce que** la ligne électriquement conductrice (4, 5) est réalisée sous la forme d'un fil ou d'un toron (147) ou d'un fil électriquement conducteur ou d'un tissu électriquement conducteur.

4. Système RFID selon l'une des revendications précédentes, **caractérisé en ce que** la au moins une ligne électriquement conductrice (4, 5) est disposée sur ou dans le gant (1, 11) ou sur ou dans la sangle de portage (102), ou que la au moins une ligne électriquement conductrice (4, 5) est disposée dans l'unité de lecture RFID (2).

5. Système RFID selon l'une des revendications précédentes, **caractérisé en ce que** la au moins une ligne électriquement conductrice (4, 5) est disposée
- dans ou sur au moins un doigt (6, 7) du gant (1, 11), ou
- dans ou sur un côté paume du gant (1, 11) ou de la sangle de portage (102), ou
- dans ou sur le dos du gant (1, 11) ou de la sangle de portage (102), ou
- dans ou sur un côté du gant (1, 11) ou de la sangle de portage (102), ou
- dans ou sur le côté doigt du gant (1, 11), ou
- est disposé dans la région d'un poignet du gant (1, 11) ou de la sangle de portage (102).

6. Système RFID selon l'une des revendications précédentes, **caractérisé en ce que** au moins un élément plat électriquement conducteur (13) est agencé dans la au moins une ligne électriquement conductrice (4, 5), ou que la au moins une ligne électriquement conductrice (4, 5) est au moins partiellement réalisée sous la forme d'un élément plat (14, 15).

7. Système RFID selon l'une des revendications précédentes, **caractérisé en ce que** la au moins une ligne électriquement conductrice (4, 5) est disposée sous une forme courbe et/ou sinueuse et/ou ondulée et/ou sous une forme en zigzag et/ou en spirale dans le dispositif (1, 11, 102) pour une disposition sur une main (103).

8. Système RFID selon l'une des revendications précédentes, **caractérisé en ce que** deux lignes électriquement conductrices (4, 5) sont prévues.

9. Système RFID selon l'une des revendications précédentes, **caractérisé en ce qu'**une longueur des deux lignes électriquement conductrices (4, 5) s'écarte l'une de l'autre d'au maximum 10 millimètres.

10. Système RFID selon l'une des revendications précédentes, **caractérisé en ce qu'**au moins deux lignes électriquement conductrices (4, 5) sont prévues et que les lignes électriquement conductrices (4, 5) sont agencées dans des doigts différents (6, 7) du gant (1, 11).

11. Système RFID selon l'une quelconque des revendications précédentes, **caractérisé en ce que** l'unité de lecture RFID (2) est conçue comme une unité de lecture RFID UHF.

12. Système RFID selon l'une des revendications précédentes, **caractérisé en ce que** le gant (1, 11) ou la sangle de portage (102) comporte un support pour supports amovibles de l'unité de lecture RFID (2).

13. Système RFID selon l'une des revendications précédentes, **caractérisé en ce que** l'unité de lecture RFID a une puissance (1) allant jusqu'à 200 milliwatts.
